# EUROPÄISCHE PATENTSCHRIFT

(11) **EP 2 552 675 B1**
(45) Veröffentlichungstag und Bekanntmachung des Hinweises auf die Patenterteilung: **28.08.2019**
(21) Anmeldenummer: 11719161.9
(22) Anmeldetag: 29.03.2011
(51) Int. Cl.: B29C 64/165, B28B 1/00, B29C 31/02, B29C 64/329, B05C 11/02, B05C 19/04, B05C 19/06, B28B 13/02, B33Y 10/00, B33Y 30/00, B33Y 40/00, B22F 3/105, B29K 105/00, B22F 3/00

(54) **VORRICHTUNG UND VERFAHREN ZUM HERSTELLEN DREIDIMENSIONALER MODELLE**
DEVICE AND METHOD FOR PRODUCING THREE-DIMENSIONAL MODELS
APPAREILLAGE ET PROCÉDÉ POUR LA PRODUCTION DE MODÈLES TRIDIMENSIONNELS

(30) Priorität: 31.03.2010 DE 102010013732
(43) Veröffentlichungstag der Anmeldung: 06.02.2013
(73) Patentinhaber: voxeljet AG, 86316 Friedberg (DE)
(72) Erfinder: HARTMANN, Andreas, Dominik, 86391 Stadtbergen (DE)
(74) Vertreter: Helbig, Christian
(86) Internationale Anmeldenummer: PCT/DE2011/000343
(87) Internationale Veröffentlichungsnummer: WO 2011/124204

(56) Entgegenhaltungen:
- EP-A1- 1 872 928
- WO-A2-2005/097476
- DE-A1- 19 928 245
- DE-C1- 19 851 224

## Beschreibung

Die Erfindung bezieht sich auf eine Vorrichtung zum Herstellen dreidimensionaler Modelle mittels 3D-Druckverfahren gemäß dem Oberbegriff des Patentanspruches 1 und ein Verfahren zum Herstellen dreidimensionaler Modelle mittels 3D-Druckverfahren gemäß Patentanspruch 5.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine gegebenenfalls mit einem Behälter umfassten Bauplattform aufgetragen und dieses anschließend gemäß Computerdaten selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Das, wie beschrieben, aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Aus der DE 102 24 981 B4 ist ein weiteres 3D-Druckverfahren insbesondere zum Aufbauen von Gussmodellen bekannt. Bei diesem Verfahren wird mit flüssigem Härter vermischtes Partikelmaterial, wie Quarzsand, auf eine Bauplattform in einer dünnen Schicht aufgetragen. Anschließend wird darüber auf ausgewählte Bereiche ein flüssiger Binder dosiert, der mit dem Härter reagiert, wodurch erwünschte Bereiche des Partikelmaterials verfestigt werden. Nach mehrmaliger Wiederholung dieses Vorgangs kann ein individuell geformter Körper aus dem gebundenen Partikelmaterial bereitgestellt werden. Dieser Körper ist zunächst in dem umliegenden, ungebundenen Partikelmaterial eingebettet und kann nach Abschluss des Bauvorganges aus dem Partikelbett entnommen werden.

Die Bereitstellung eines Baubehälters mit der darin befindlichen, in vertikaler Richtung absenkbaren Bauplattform erfordert bei allen genannten 3D-Druckverfahren einen hohen technischen Aufwand bei der Abdichtung der Behälterwand gegen die Plattform, um das Partikelmaterial vor dem unkontrollierten Abfließen durch den Spalt zwischen dem Rand der Bauplattform und der Behälterwand zu hindern, da ansonsten die Gefahr besteht, dass die Plattform wegen des gegebenenfalls körnigen Partikelmaterials an der Behälterwand verklemmt.

Ein weiterer Nachteil der absenkbaren Bauplattform liegt in der stetigen Zunahme des zu bewegenden Gewichtes auf der Bauplattform bei voranschreitendem Bauprozess. Insbesondere beim Auftragen der neuen Schicht kann es erforderlich sein, dass das Pulverbett um etwas mehr als die Schichtdicke abgesenkt und dann wieder auf das erforderliche Maß angehoben wird, um die Schichtdicke hinreichend genau einstellen zu können. Bei einem solchen revolvierenden Betrieb muss nicht nur das gesamte Gewicht der Pulverschüttung einschließlich Bauplattform, sondern auch die Reibungskräfte des Pulverbettes zur Behälterwandung und die Dichtungsreibung zwischen Bauplattform und Behälterwand überwunden werden. Dies führt insbesondere bei großen Baufeldern und hohen Schüttdichten des verwendeten Partikelmaterials zu hohen Belastungen der Führungen und Antriebe.

Hierzu ist es aus der EP 0 644 809 B1 und der DE 10 2006 030 350 A1 bekannt, nicht das Partikelbett relativ zum Arbeitstisch abzusenken sondern stattdessen die Beschichtungsvorrichtung und den Druckkopf zum Auftragen des Partikelmaterials und des Bindemittels relativ zum Partikelbett anzuheben. Es ist dabei bekannt, dass an einem Tragrahmen über Linearführungen ein Beschichter für Partikelmaterial sowie ein Druckkopf angeordnet sind.

Diese Art 3D-Druckanlage wird vorzugsweise bei der Herstellung relativ großer und schwerer Formkörper eingesetzt. Dafür sind größere Mengen Partikelmaterial notwendig, die den Tragrahmen zumindest zu Beginn des Prozesses mit einem hohen zusätzlichen Gewicht belasten würden, wenn sie auf der Anlage bevorratet werden. Die großen Vorteile der Anlage, vertikal konstante Lasten zu bewegen, wären in diesem Fall verloren. Das Partikelmaterial wird daher vorzugsweise stationär, neben der Anlage gelagert und dann der Beschichtungsvorrichtung zugeführt. Hierbei ergibt sich jedoch die Schwierigkeit, das Partikelmaterial auf das sich während des Bauvorgangs veränderliche Niveau der Beschichtungsvorrichtung zu fördern. Die bei anderen 3D-Druckverfahren verwendeten Verfahren zur Förderung des Partikelmaterials sind dafür nicht geeignet.

In der DE 201 07 262 U1 wird beispielsweise eine Zufuhr des Partikelmaterials von einem größeren, außerhalb der Anlage stehenden Vorrats-Silo zu einem kleineren Vorlagesilo in der 3D-Druckanlage mittels Spiralförderer vorgeschlagen. Spiralförderer benötigen jedoch relativ große Radien bei Richtungsänderungen und lassen nur kleine elastische Verformungen im Betrieb zu. Der Förderstrang kann deshalb je nach Anlagengröße relativ lange werden. Das führt zu großen Mengen an Partikelmaterial, das sich in der Förderstrecke befinden muss, bevor am Beschichter entsprechendes Material ankommt. Dieses Material muss dann z.B. bei einem Wechsel des Partikelmaterials auch wieder in das Vorratssilo zurück gefördert werden.

WO 2005/097476 offenbart eine Vorrichtung zum 3D Drucken, die eine Bauplattform und einen um diese angeordnete Tragrahmen aufweist, an dem eine Dosiervorrichtung für Partikelmaterial und eine Verfestigungseinrichtung angebracht sind, wobei der Tragrahmen in Z-Richtung verfahrbar ist. Der Gegenstand der Erfindung wird aber weder beschrieben noch nahe gelegt.

Kommt dann beispielsweise noch hinzu, dass das Partikelmaterial mit einer flüssigen Härterkomponente vor dem Auftrag gemischt wird und die Mischung einen möglichst gleichmäßigen Feuchtegehalt aufweisen soll, scheidet eine Spiralförderung sowieso aus, denn Förderspiralen erzeugen im Betrieb Reibungswärme und trocknen über die hohe Luftmenge im System und die ständig umgewälzte Partikelmaterialoberfläche das Partikelmaterial aus. Zudem ergeben sich in gebogenen Spiralfördersystemen an den Außenradien Zonen an denen keine Förderung stattfindet. Das Partikelmaterial kann sich dort ablagern und Anhaftungen bilden. Diese Anhaftungen können wachsen, bis sie als Klumpen abfallen und in dieser Form dem Beschichter zugeführt werden, der wiederum dann zum Ausfall neigt. Um dies zu vermeiden, müssen Spiralföderer regelmäßig zerlegt und gereinigt werden, was bei mit zunehmender Förderlänge aufwendig und teuer wird.

Wird als Partikelmaterial beispielsweise Sand verwendet, ist die Haltbarkeit eines Spiralsystems zeitlich beschränkt, da der Transport über Reibung erfolgt und der Sand dabei eine hohe abrasive Wirkung entfaltet. Weiter kann sich der Abrieb der Förderspirale negativ auf den Prozess auswirken.

Wird das Partikelmaterial in eine oberste Position gefördert und dann dem Beschichter über eine Fallstrecke zugeführt, kann ein Teil des beigemischten flüssigen Mediums verdunsten. Die Fließeigenschaften des Partikelmaterialgemisches werden dabei verändert. Da sich die vertikale Lage des Beschichters im Prozess ständig ändert, würde sich damit auch das Fließverhalten des Partikelmaterialgemisches ständig ändern.

Pneumatische Förderungen scheiden aus ähnlichen Gründen aus, da hier das Partikelmaterial ebenfalls mit einem hohen Luftstrom in Kontakt kommt und dabei undefiniert getrocknet wird.

Es ist daher Aufgabe der Erfindung für die beschriebene 3D-DruckAnlage eine Vorrichtung und ein Verfahren bereit zu stellen, mit denen es möglich ist in einfacher Weise beim Bauen der Objekte dem Beschichter Partikelmaterial in ausreichender Menge und mit möglichst geringer Wechselwirkung mit der Atmosphäre zur Verfügung zu stellen.

Diese Aufgabe wird durch eine Vorrichtung gemäß dem Patentanspruch 1 und ein Verfahren gemäß Patentanspruch 5 gelöst. Gemäß der vorliegenden Erfindung wird eine Vorrichtung zum Herstellen dreidimensionaler Modelle mittels 3-D Druckverfahren beschrieben, wobei eine Bauplattform zum Aufbringen von Baumaterial vorgesehen ist und ein Tragrahmen um die Bauplattform angeordnet ist, an dem über Linearführungen zumindest eine Dosiervorrichtung für Partikelmaterial und eine Verfestigungseinrichtung für Partikelmaterial angebracht sind und der Tragrahmen in einer Z-Richtung, das heißt im wesentlichen senkrecht zu einer Grundfläche der Bauplattform verfahrbar ist. Es ist bei der erfindungsgemäßen Vorrichtung dabei ein einen Partikelmaterialbehälter aufweisendes Zubringermittel vorgesehen, um das Partikelmaterial der Dosiervorrichtung aus einer Bevorratung chargenweise und mit möglichst geringen Scherkräften und ohne wesentliche Wechselwirkung mit der Atmosphäre zuzuführen, wobei der Partikelmaterialbehälter vertikal und in horizontaler Richtung verfahrbar ist.

Als Verfestigungseinrichtung für Partikelmaterial kann beispielsweise ein Druckkopf zur Dosierung von Flüssigkeitstropfen verwendet werden. Die Flüssigkeit führt hierbei bei Kontakt mit dem Partikelmaterial zu dessen lokal begrenzter Verfestigung.

Der Partikelbehälter der erfindungsgemäßen Vorrichtung führt somit beim chargenweisen Fördern des Partikelmaterials von einem stationären Silo zu der Dosiervorrichtung eine gewisse Strecke zurück.

Gemäß einer bevorzugten Ausführungsform enthält eine Charge weniger Partikelmaterial als für das Ablegen von sämtlichen Schichten auf der Bauplattform erforderlich ist. Bei einer derartigen Ausgestaltung ist es möglich, dass das Gewicht des Beschichters verringert werden kann.

Vorzugsweise sollte aber eine Charge ausreichend sein, um mindestens eine Schicht Partikelmaterial auf der Bauplattform abzulegen. Bei einer solchen Ausgestaltung muss der Bauprozess nicht innerhalb des Ablegens einer Partikelschicht unterbrochen werden und kann somit sehr genau ausgeführt werden.

Insbesondere, da der Partikelmaterialbehälter der erfindungsgemäßen Vorrichtung vertikal verfahrbar ist, kann ein Auffüllen des Beschichters besonders einfach und ohne Verlust und unnötig hohen Lufteintrag aufgefüllt werden.

Da der Partikelmaterialbehälter in horizontaler Richtung verfahrbar und vorzugsweise schwenkbar ist, so ist das Befüllen des Beschichters in verschiedenen horizontalen Stellungen möglich.

Gemäß einer besonders bevorzugten Ausführungsform der vorliegenden Erfindung weist das Zuführmittel einen Trogkettenförderer und/oder ein Förderband auf.

Die oben erwähnte Aufgabe der vorliegenden Erfindung wird darüberhinaus auch mit einem Verfahren zum Herstellen dreidimensionaler Modelle mittels 3-D Druckverfahren umfassend die folgenden Schritte gelöst,
a) Ablegen einer Schicht eines Partikelmaterials aus einer Dosiereinheit auf eine stationäre Bauplattform;
b) Selektives Verfestigen des Partikelmaterials mittels einer Verfestigungseinheit gemäß eines dem herzustellenden Modelles entsprechenden Querschnittes;
c) Anheben der Dosier- und/ gegebenenfalls Verfestigungseinheit um eine Partikelschichtdicke;
d) Wiederholen der Schritte a) bis c), bis das endgültige Modell erreicht ist.

Erfindungsgemäß wird während des Herstellverfahrens das Partikelmaterial in die in ihrer Höhe veränderliche Dosiervorrichtung nachgefüllt, indem das Partikelmaterial der Dosiervorrichtung aus einer Bevorratung chargenweise mittels eines einen Partikelmaterialbehälter aufweisenden Zubringermittels zugeführt wird, wobei der Partikelmaterialbehälter vertikal und in horizontaler Richtung verfahrbar ist.

Gemäß einer bevorzugten Ausführungsform wird das Partikelmaterial, vor der schichtweisen Verarbeitung mit einem flüssigen Medium gemischt. Dies kann für die gesamte für den Prozess notwendige Partikelmaterialmenge vor Aufnahme des Prozesses in einer Mischeinrichtung erfolgen. Das Material würde dann einem stationären Silo, der Bevorratung, und von da aus chargenweise dem Beschichtungsapparat je nach Prozessfortschritt zugeführt werden. Dieses Vorgehen hat den Vorteil, dass die Mischvorrichtung nicht innerhalb der Prozesskette steht und damit bei Fehlfunktion nicht unmittelbar auf den Prozessablauf auswirkt. Andererseits muss Partikelmaterial aufwendig gegen eine Entmischung oder einer Verflüchtigung des flüssigen Mediums geschützt werden.

Vorteilhafterweise wird das Materialgemisch deshalb während der Verarbeitung im Prozess mit einem Mischer hergestellt. Dafür eigenen sich bevorzugt Chargenmischer. Dem Mischer wird auf Anforderung das Partikelmaterial z.B. über eine pneumatische Förderstrecke zugeführt. Der Mischer wiegt das Partikelmaterial in vorbestimmter Menge in die Mischkammer ein und gibt entsprechend der gewählten Rezeptur das flüssige Härtermedium zu. Nach einer festgelegten Mischdauer wird das Materialgemisch einem Vorlagebehälter zugeführt. Der Vorlagebehälter verfügt z.B. über Füllstandsensoren, die bei Unterschreitung eines bestimmten Niveaus der Steuerung des Mischers anzeigen, eine nächste Charge des Partikelmaterialgemisches fertig zu stellen. Der Vorlagebehälter verfügt zudem über eine z.B. pneumatisch betätigte Klappe zu dessen Entleerung.

Diese wird geöffnet, wenn sich ein Fördertiegel unterhalb der Klappe befindet. Das Materialgemisch fließt in diesem Fall unter Schwerkrafteinfluss in den Tiegel. Die Füllhöhe wird z.B. über eine Anordnung bestimmt, die über Schüttkegel dichtet. Der Fördertiegel wird dann über einen Linearantrieb auf das notwendige Niveau oberhalb der Beschichtungsvorrichtung gebracht. Dort wird der Födertigel in einen Empfängerbehälter entleert. Das Partikelmaterialgemisch wird dort vom Einfüllpunkt aus z.B. über eine Förderschnecke auf die Breite des Beschichters verteilt. Der Empfängerbehälter einschließlich Verteilmechanismus kann dabei mit der Beschichtungsvorrichtung transversal mitbewegt werden. In diesem Fall muss der Beschichter zum Auffüllen des Empfängerbehälters in eine definierte Übergabeposition unterhalb des Fördertiegels verfahren. In einer bevorzugten Ausführungsform ist der Empfängerbehälter einschließlich Verteilmechanismus fest am Tragrahmen befestigt und kann sich nur mit diesem vertikal bewegen. An dem Verteilmechanismus ist wiederum eine Dosiervorrichtung angeschlossen, die den Beschichter mit dem Partikelmaterialgemisch auffüllt, wenn dessen Vorrat aufgebraucht ist. Dies hat den Vorteil, dass die mit dem Beschichter mitgeführte Partikelmaterialgemischmenge relativ klein ist und damit auf den Tragrahmen geringere dynamische Lasten wirken.

Anschließend kann der Beschichter eine dünne Schicht des Partikelmaterialgemisches auf eine vertikal fixierte Bauebene ausbringen. Dann folgt der Verfestigungsschritt z.B. mit Hilfe eines Druckkopfes, der über einzeln angesteuerte Düsen eine Flüssigkeit auf einen dem aktuellen Querschnitt des zu bauenden Körpers entsprechenden Bereich dosiert. Diese Flüssigkeit reagiert mit dem Partikelmaterialgemisch und verfestigt die Partikel in dem gewünschten Bereich bzw. führt auch zu einer Verfestigung mit der eventuell darunter liegenden Schicht des Partikelmaterialgemisches. Anschließend wird der Tragrahmen um die Dicke der aktuell bearbeiteten Schicht angehoben, eine neue Schicht aufgetragen und gemäß der neuen Querschnittsdaten verfestigt. Der Vorgang aus Anheben, Schichtauftrag und Verfestigung wird solange wiederholt, bis der gewünschte Körper fertig gestellt ist.

Während dieses Vorganges wird der Beschichter mehrfach zum Empfangsbehälter verfahren und dort mit frischem Partikelmaterialgemisch befüllt, das in mehreren Einzelchargen im Mischer zubereitet und über die Förderstrecke dem Empfangsbehälter zugeführt wurde. Mit voranschreitendem Prozess steigt die Höhe des Baukörpers. Dabei verändert sich die vertikale Lage des Tragrahmens und damit auch die des Empfangsbehälters. Entsprechend wandert die Übergabeposition von Fördertiegel in den Empfangsbehälter in vertikaler Richtung nach oben.

Zuletzt wird das nicht verfestigte Partikelmaterial entfernt. Dazu wird die Bauebene auf einer Seite aus der Vorrichtung gefahren und eine weitere Bauebene evtl. auf einer gegenüberliegenden Seite in die Vorrichtung eingefahren, damit der Bauprozess erneut gestartet werden kann, währen der vorherige Baukörper vom umliegenden Partikelmaterial befreit wird.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine räumliche Darstellung einer bevorzugten erfindungsgemäßen Vorrichtung;
Figur 2 a) bis c) eine seitliche Ansicht der Vorrichtung während verschiedener Befüllvorgänge während des Bauprozesses;
Figur 3 a) und b) Befüllvorgänge in unterschiedlichen Befüllhöhen des Tragrahmens;
Figur 4 eine seitliche Darstellung einer Vorrichtung mit Trogförderer und verschließbaren Trögen; und
Figur 5 eine seitliche Darstellung einer Vorrichtung mit überdachtem Förderband.

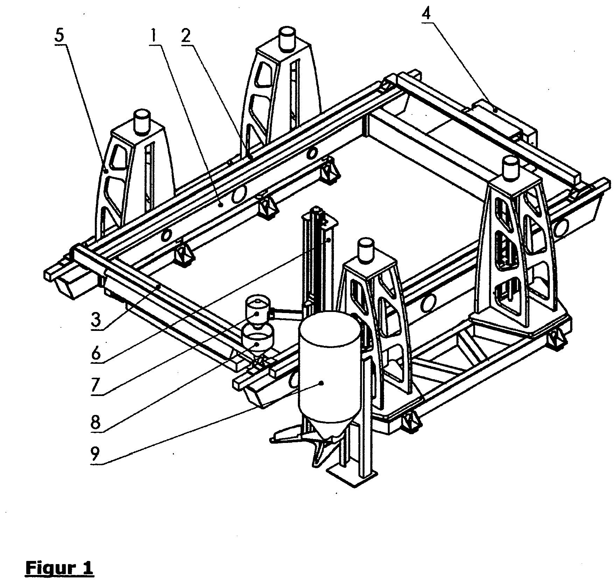

Die Figur 1 zeigt als Anwendungsbeispiel einen Schrägriss einer Vorrichtung, die zum Herstellen von 3D-Modellen verwendet werden kann. Diese gezeigte bevorzugte Vorrichtung weist unter anderem einen Tragrahmen 1 auf, der über Verfahreinheiten 5 in vertikaler Richtung beziehungsweise X-Richtung verschiebbar ist.

Der Tragrahmen 1 trägt den Partikeldosierer oder Beschichter 3 und die Verfestigungseinrichtung beispielsweise ein Druckkopf 4. Beschichter 3 und Druckkopf 4 können über die Länge des Tragrahmens 1 verfahren werden. Der Raum innerhalb des Tragrahmens 1 ist der Bauraum in dem die Modelle aufgebaut werden. Die Einheiten Beschichter 3 und Verfestigungseinrichtung 4 können dabei den gesamten Bauraum erreichen.

Der Beschichter 3 wird in seiner Parkposition gehalten, während die Verfestigungseinheit 4 sich in kollisionsgefährlicher Nähe befindet. Während der Beschichter 3 in der Parkposition steht kann er mit Partikelmaterial gefüllt werden.

In einer bevorzugten Ausführungsform trägt der Beschichter 3 nur soviel Partikelmaterial, dass er eine Schicht des Bauprozesses sicher aufbringen kann. bei einer solchen Ausgestaltung wird der Beschichter 3 nach jeder aufgetragenen Schicht wieder mit einer Schicht entsprechenden Partikelmenge beschickt.

Beim Auftragen der nächsten Schicht wird zu Beginn der Tragrahmen 1 in vertikaler Richtung um eine Schichtstärke angehoben. Damit ändert sich auch die Nachfüllposition des Beschichters 3.

In der Figur 1 ist die Nachfülleinrichtung für den Beschichter 3 gemäß einer bevorzugten Ausführungsform dargestellt. Die Nachfülleinrichtung weist als Zuführmittel eine Hubeinrichtung 6, einen Fördertiegel 7 und einen Empfangsbehälter 8 auf und eine Bevorratung beziehungsweise eine Silo/Mischereinheit 9.

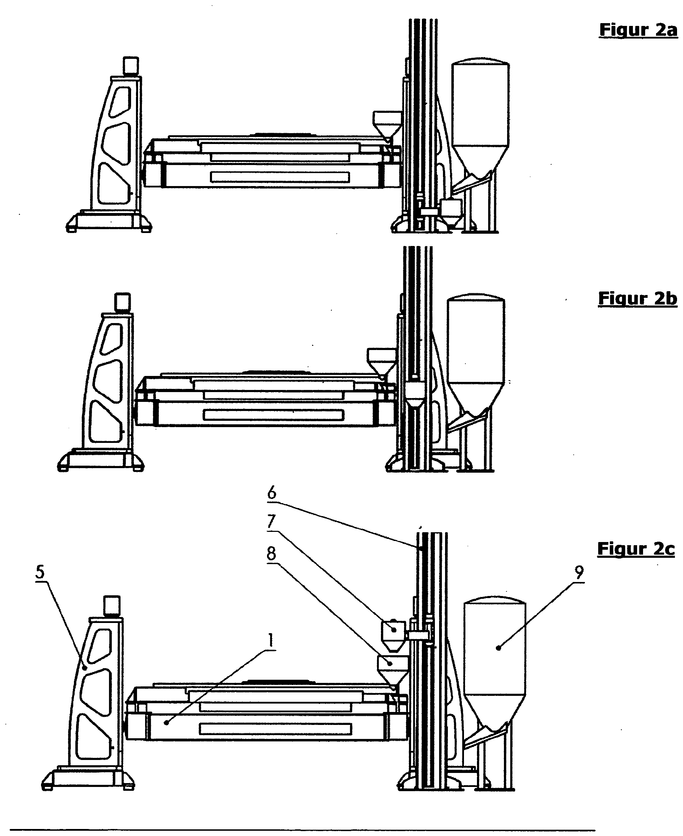

Gemäß einer Ausführungsform kann am Ausgang der Silo/Mischereinheit 8 prozessfertiges Material zur Verfügung gestellt werden. In der in Figur 2a gezeigten, besonders bevorzugten Ausführungsform der Erfindung wird durch eine vertikal bewegliche Hubeinheit 6 ein Tiegel 7 unter den Ausgang der Silo/Mischereinheit 9 gebracht. Nachdem der Tiegel 7 befüllt ist, wird er auf die aktuelle Höhe des Tragrahmens gebracht. Im Anschluss kann es in den Empfangsbehälter 8 entleert werden.

Während dieses Transports des Partikelmaterials kommt es immer wieder mit der Atmosphäre also mit dem Sauerstoff der Luft in Berührung. Der Kontakt ist dabei im Wesentlichen auf die Oberfläche beschränkt. Werden wegen des jeweils verwendeten Partikelmaterials strengere Anforderungen gestellt, kann der Tiegel 7 verschließbar ausgeführt werden. Hierbei können dann auch zusätzlich künstliche Atmosphären im Tiegel 7 erzeugt werden.

Die Verfahrzeit auf die vertikale Höhe kann bei den gegebenen Bauhöhen vernachlässigt werden, sofern der Dampfdruck der auf das Partikelmaterial aufgebrachten Flüssigkeit moderat ist.

Da der Transporttiegel 7 klein ist und immer gleich befüllt wird, sind keine Änderungen im Schüttgut durch Verfestigungen zu erwarten. Wenn Schüttgüter verwendet werden die ein solches Verhalten zeigen, kann der Prozess ideal darauf eingestellt werden, da das Verhalten durch die konstante Füllhöhe immer gleich ist.

Nachdem das Material im Empfangsbehälter 8 angekommen ist, wird es über die Länge des Beschichters 3 verteilt. Hierzu können Schnecken verwendet werden. Diese sind nur so lang ausgeführt, dass der komplette Beschichter 3 gleichmäßig mit Partikelmaterial gefüllt wird. Durch die kurze Förderschnecke sind keine negativen Einflüsse auf das Partikelmaterial zu befürchten.

Je nach Bauprozess kann es notwendig sein unterschiedliches Partikelmaterial in den Beschichter 3 zu bringen. Hierzu kann der Tiegel 7 abwechselnd mit verschiedenen Materialien aus mehreren Silo/Mischereinheiten 9 versorgt werden.

Ebenso könnten für den Materialtransport auch Systeme mit mehreren Tiegeln, wie zum Beispiel Trogkettenförderer oder auch Förderbänder zum Einsatz kommen.

Gemäß der in den Figuren 1 und 2 gezeigten bevorzugten Ausführungsform weist die Silo/Mischereinheit 8 eine geringe Bauhöhe auf und der Auslass liegt deutlich unterhalb der obersten Befüllposition. Der Tiegel ist daher zusätzlich zur vertikalen in eine zweite Richtung, in horizontaler Richtung beweglich.

Die Anordnung auch derart vorgesehen sein, dass eine Silo/Mischereinheit 9 oberhalb der obersten Befüllposition aufgehängt wird. Dabei könnte dann eine zusätzliche Bewegungsrichtung entfallen. Der Tiegel 7 senkt dann das Partikelmaterial bis zum Empfangsbehälter 8 ab. Es ist dann ebenso wie bei der vorher geschilderten Anordnung vor einem Freifall und der Atmosphäre geschützt.

Beide bevorzugten Anordnungen schützen den Tragrahmen 1 auch vor Erschütterungen durch Pulvermaterial mit großer Freifallhöhe. Die Belastung auf den Tragrahmen 1 ist auf Grund der immer gleichbleibenden, geringen Fallhöhe konstruktiv einfach zu berücksichtigen.

Ebenso bevorzugt sind Ausführungsformen bei denen mehrere Nachfülleinrichtungen eingesetzt werden. Diese können bei einem erhöhten Materialbedarf notwendig werden.

Zusätzlich können auch andere Transportmechanismen genutzt werden, die eine variable Befüllhöhe des Beschichters ermöglichen, chargenweise arbeiten und dabei kleine Freifallhöhen erzeugen.

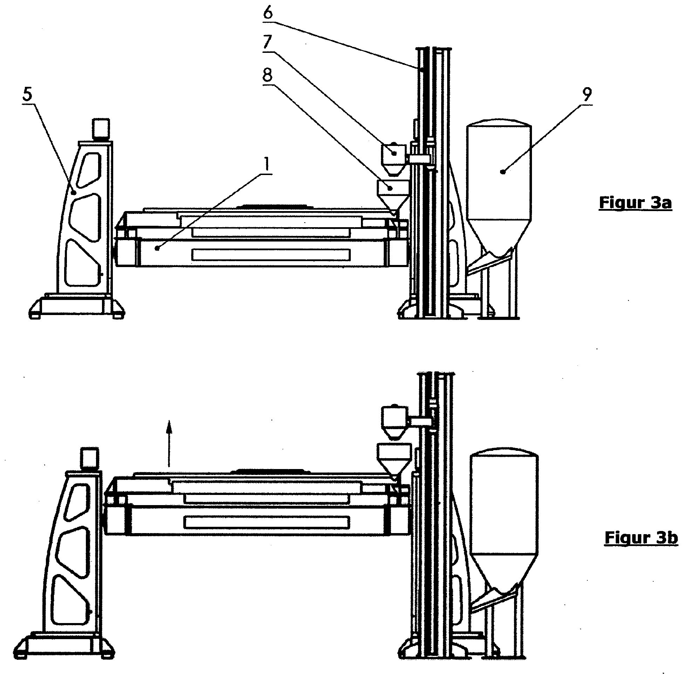

Figur 3 zeigt die Befüllung in unterschiedlichen vertikalen Lagen des Tragrahmens. Figur 2 zeigt den Befüllvorgang für sich gesehen.

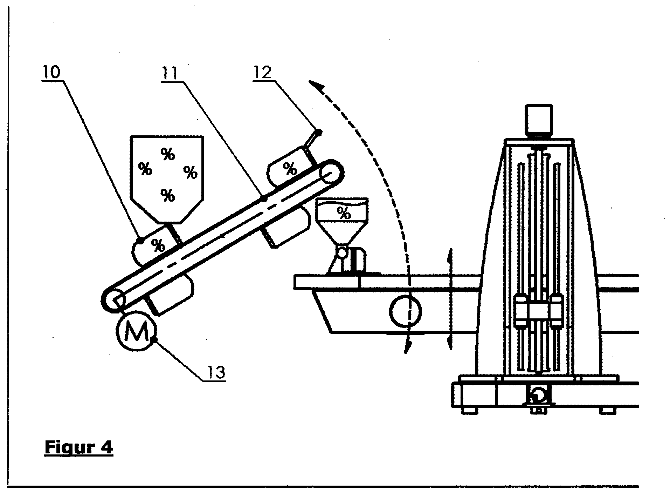

Figur 4 zeigt eine Vorrichtung mit einem Trogkettenförderer als Zubringermittel. Hierbei sind mehrere Tröge 10 an einer Kette 11 aufgehängt. Sie werden an der Silo/Mischereinheit befüllt und am Beschichter wieder entladen. Je nach Partikelmaterial können wieder Deckel 12 zum Schutz vor Abdampfungen und/oder Oxidation verwendet werden. Eine Steuerung kann je nach Prozessstatus der Produktionsanlage die Motoren 13 der Antriebskette diskontinuierlich schalten.

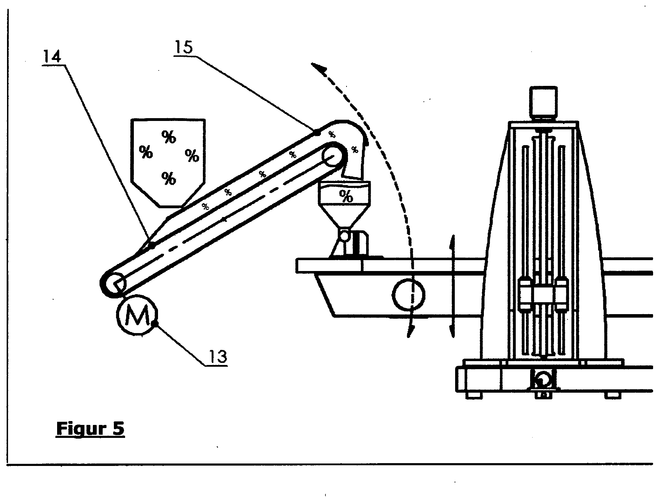

Ebenso bevorzugt könnte, wie in der Figur 5 dargestellt, ein Förderband 14 zum Materialtransport als Zubringermittel eingesetzt werden. Dabei wird das Partikelmaterial vorzugsweise nahe an umgebenden Wänden 15 geführt, um einen Atmosphärenkontakt zu minimieren. Die Reibungseinflüsse sind auch hier, verglichen mit Förderschnecken, gering. Auch hier ist es möglich, dass eine Steuerung je nach Prozessstatus der Produktionsanlage die Motoren 13 des Förderbandes diskontinuierlich schaltet.

### Bezugszeichenliste

- 1: Tragrahmen
- 2: Verfahreinheiten in X-Richtung
- 3: Beschichter
- 4: Druckkopf
- 5: Verfahreinheit in Z-Richtung
- 6: Hubeinrichtung
- 7: Fördertigel
- 8: Empfängerbehälter
- 9: Silo-/Mischereinheit
- 10: Tröge
- 11: Kette
- 12: Deckel
- 13: Motoren
- 14: Förderband
- 15: Wände

## Patentansprüche

1. Vorrichtung zum Herstellen dreidimensionaler Modelle mittels 3-D Druckverfahren, wobei eine Bauplattform zum Aufbringen von Baumaterial vorgesehen ist und ein Tragrahmen (1) um die Bauplattform angeordnet ist, an dem über Linearführungen zumindest eine Dosiervorrichtung (3) für Partikelmaterial und eine Verfestigungseinrichtung (4) für Partikelmaterial angebracht sind und der Tragrahmen in einer Z-Richtung, das heißt im wesentlichen senkrecht zu einer Grundfläche der Bauplattform verfahrbar ist, **dadurch gekennzeichnet, dass** ferner ein einen Partikelmaterialbehälter (7) aufweisendes Zubringermittel vorgesehen ist, um das Partikelmaterial der Dosiervorrichtung aus einer Bevorratung (9) chargenweise zuzuführen und mit möglichst geringen Scherkräften und ohne wesentliche Wechselwirkung mit der Atmosphäre zuzuführen, wobei der Partikelmaterialbehälter (7) vertikal und in horizontaler Richtung verfahrbar ist.

2. Vorrichtung nach Anspruch 1, **dadurch gekennzeichnet, dass** das Zuführmittel einen Trogkettenförderer (10, 11) aufweist.

3. Vorrichtung nach einem der vorhergehenden Ansprüche, **dadurch gekennzeichnet, dass** das Zuführmittel ein Förderband (11) aufweist.

4. Vorrichtung nach einem der vorhergehenden Ansprüche, **dadurch gekennzeichnet, dass** der Partikelmaterialbehälter schwenkbar ist.

5. Verfahren zum Herstellen dreidimensionaler Modelle mittels 3-D Druckverfahren umfassend die Schritte
a) Ablegen einer Schicht eines Partikelmaterials aus einer Dosiervorrichtung (3) auf eine stationäre Bauplattform;
b) Selektives Verfestigen des Partikelmaterials mittels einer Verfestigungseinheit (4) gemäß eines dem herzustellenden Modelles entsprechenden Querschnittes;
c) Anheben der Dosier- und/ gegebenenfalls Verfestigungseinheit um eine Partikelschichtdicke;
d) Wiederholen der Schritte a) bis c), bis das endgültige Modell erreicht ist,
wobei während des Herstellverfahrens das Partikelmaterial in die in ihrer Höhe veränderliche Dosiervorrichtung nachgefüllt wird, **dadurch gekennzeichnet**, das Partikelmaterial der Dosiervorrichtung aus einer Bevorratung (9) chargenweise mittels eines einen Partikelmaterialbehälter (7) aufweisenden Zubringermittels zugeführt wird, wobei der Partikelmaterialbehälter vertikal und in horizontaler Richtung verfahrbar ist.

## Claims

1. A device for producing three-dimensional models by means of a 3D printing process, wherein a construction platform for applying construction material is provided and a support frame (1) is arranged around the construction platform, at least one metering unit (3) for particulate material and one solidifying unit (4) for particulate material being mounted to said support frame (1) via longitudinal guides and the support frame being displaceable in Z direction, i.e. substantially perpendicular to a base of the construction platform, **characterised in that** there is further provided a feeding means comprising a particulate material container (7) for feeding the particulate material to the metering unit in batches from a supply (9) and with the lowest possible shear forces and without substantial interaction with the atmosphere, the particulate material container (7) being movable vertically and horizontally.

2. The device according to claim 1, **characterised in that** the feeding means comprises a troughed chain conveyor (10, 11).

3. The device according to any one of the preceding claims, **characterised in that** the feeding means comprises a conveyor belt (11).

4. The device according to any one of the preceding claims, **characterised in that** that the particulate material container can be swivelled.

5. A method for producing three-dimensional models by means of a 3D printing process, the method comprising the steps of:
a) depositing a layer of particulate material from a metering unit (3) on a stationary construction platform;
b) selectively solidifying the particulate material by means of a solidification unit (4) in accordance with a cross-section corresponding to the model to be produced;
c) raising the metering unit and, where applicable, the solidification unit by one particle layer thickness;
d) repeating steps a) to c) until the final model is obtained,
wherein during the manufacturing process the particulate material is refilled into the metering unit which is variable in its height, **characterised in that** the particulate material is supplied to the metering unit in batches from a supply (9) by a feeding means comprising a particulate material container (7), said particulate material container being movable vertically and horizontally.

## Revendications

1. Dispositif pour la fabrication de modèles tridimensionnels par un procédé d'impression 3D, dans lequel dispositif une plateforme de construction est prévue pour l'application de matériau de construction et un cadre de support (1) est disposé autour de la plateforme de construction, sur lequel au moins une unité de dosage (3) pour le matériau particulaire et une unité de solidification (4) pour le matériau particulaire sont fixés par des guides linéaires et le cadre de support est mobile dans une direction Z, c'est à dire sensiblement perpendiculaire à une surface de base de la plateforme de construction, **caractérisé en ce qu'**il est en outre prévu un moyen d'alimentation comprenant un réservoir de matériau particulaire (7) pour amener en discontinu le matériau particulaire à l'unité de dosage à partir d'une alimentation (9) et avec les forces de cisaillement les plus faibles possibles et sans interaction substantielle avec l'atmosphère, le réservoir de matériau particulaire (7) étant mobile verticalement et horizontalement.

2. Dispositif selon la revendication 1, **caractérisé en ce que** le moyen d'alimentation comprend un convoyeur Redler (10, 11).

3. Dispositif selon l'une quelconque des revendications précédentes, **caractérisé en ce que** le moyen d'alimentation comprend une bande transporteuse (11).

4. Dispositif selon l'une quelconque des revendications précédentes, **caractérisé en ce que** le réservoir de matière particulaire peut être pivoté.

5. Procédé de fabrication de modèles tridimensionnels par un procédé d'impression 3D, comprenant les étapes consistant à
a) déposer une couche de matière particulaire à partir d'une unité de dosage (3) sur une plateforme de construction stationnaire ;
b) solidifier de manière sélective le matériau particulaire au moyen d'une unité de solidification (4) selon une section transversale correspondant au modèle à produire ;
c) lever l'unité de dosage et, si nécessaire, l'unité de solidification par une épaisseur de couche de particules ;
d) répéter les étapes a) à c) jusqu'à l'obtention du modèle final,
le matériau particulaire étant rechargé pendant le processus de fabrication dans l'unité de dosage dont la hauteur est variable, **caractérisé en ce que** le matériau particulaire est amené en discontinu à l'unité de dosage à partir d'une alimentation (9) au moyen d'un moyen d'alimentation comportant un réservoir de matériau particulaire (7), le réservoir de matériau particulaire étant mobile verticalement et horizontalement.
